# FASCICULE DE BREVET EUROPEEN

(11) **EP 1 322 210 B1**
(45) Date de publication et mention de la délivrance du brevet: **21.07.2004**
(21) Numéro de dépôt: 01974396.2
(22) Date de dépôt: 27.09.2001
(51) Int. Cl.: A47J 43/07

(54) **RECIPIENT D'APPAREIL ELECTROMENAGER DE PREPARATION CULINAIRE FERME PAR UN COUVERCLE AMOVIBLE PIVOTANT**
MITTELS EINES DREHBAREN DECKELS GESCHLOSSENES KOCHGEFÄSS
VESSEL FOR ELECTRICAL HOUSEHOLD FOOD PROCESSOR CLOSED WITH A PIVOTING REMOVABLE LID

(30) Priorité: 04.10.2000 FR 0012688
(43) Date de publication de la demande: 02.07.2003
(73) Titulaire: SEB S.A., 69130 Ecully (FR)
(72) Inventeur: TOMPA, Carole, F-65000 Tarbes (FR); ASTEGNO, Jean-Paul, F-64420 Espoey (FR); LALLEMAND, Thomas, F-65100 Lourdes (FR); PEYRAS, Lionel, F-65100 Jarret (FR)
(74) Mandataire: Kiehl, Hubert
(86) Numéro de dépôt international: PCT/FR2001/002989
(87) Numéro de publication internationale: WO 2002/028246

(56) Documents cités:
- EP-A- 0 556 467
- EP-A- 0 812 560
- GB-A- 2 217 802
- JP-A- 11 276 913

## Description

La présente invention concerne le domaine technique général des appareils électroménagers de préparation culinaire tels que notamment les robots ménagers multifonctions ou encore les blenders prévus plus particulièrement pour les préparations liquides. La présente invention est relative à un récipient muni d'un couvercle de fermeture amovible comprenant des moyens d'articulation de ce couvercle sur le récipient.

Un tel récipient est notamment destiné à être associé à un robot ménager dans lequel les aliments sont finement divisés, mélangés et ou émulsionnés par un outil approprié solidaire d'un arbre faisant saillie au centre du fond du récipient et entraîné par un moteur électrique. Il est donc nécessaire que le couvercle ferme convenablement le récipient pour empêcher que les aliments ne sortent du récipient en cours de traitement. Il faut aussi que l'ouverture et la fermeture du couvercle soient faciles à réaliser et que le couvercle ne gêne pas lors de l'enlèvement des aliments du récipient.

On connaît notamment de l'art antérieur des robots ménagers dans lesquels le couvercle est verrouillé sur le récipient ou sur le boîtier de l'appareil au moyen de mâchoires. De tels appareils sont d'un coût de fabrication élevé. On connaît également des robots dans lesquels le couvercle est verrouillé sur le récipient au moyen d'une fermeture à baïonnettes. Ce mode de fermeture est toutefois d'une utilisation peu aisée.

On a déjà proposé dans le document US 4 111 372 un robot ménager dans lequel une charnière est formée par un tenon, issu du couvercle, engagé dans une découpe longitudinale du récipient. L'insertion du tenon dans la découpe n'est pas facile à réaliser et demande de bons yeux et une certaine habileté. En outre, ce mode de liaison peut poser des problèmes d'étanchéité.

Le document EP 0 556 467 se rapporte à un robot dont le couvercle est articulé sur le récipient par une charnière, tandis que le document EP 0 812 560 divulgue un bras articulé à l'extérieur du récipient auquel un couvercle est relié de façon amovible, nécessitant la fabrication de deux pièces séparées.

On peut constater qu'il existe des couvercles articulés, des couvercles reliés de façon amovible au récipient du robot, un couvercle relié de façon amovible à un bras d'articulation. Par contre, on ne trouve pas de couvercle à la fois articulé et relié de façon amovible au récipient, assurant une mise en place facile et une fermeture sûre et aisément contrôlable du couvercle sur le récipient, utilisant un minimum de pièces réduisant dans le même temps le nombre et la durée des opérations de montage de l'appareil.

Le but de la présente invention est d'apporter une solution permettant de simplifier l'utilisation de l'appareil, tout en réduisant le nombre de pièces à fabriquer et par conséquent réduisant aussi le temps de montage de l'appareil.

A cet effet, la présente invention a pour objet une enceinte de travail pour appareil électroménager de préparation culinaire comprenant un récipient et un couvercle, le récipient et le couvercle comportant des moyens d'articulation, les moyens d'articulation comportant deux surfaces d'emboîtement complémentaires, solidaires l'une du couvercle et l'autre du récipient, présentant selon au moins un axe de pivotement une série de sections au moins partiellement circulaires perpendiculaires audit axe de pivotement, du fait que le couvercle est amovible du récipient et que la surface d'emboîtement solidaire du récipient étant ménagée sur une poignée du récipient. L'avantage de cette invention réside dans le fait que les surfaces d'emboîtement complémentaires permettent à la fois de relier le couvercle de façon amovible tout en permettant de l'articuler au récipient. Les sections au moins partiellement circulaires peuvent former un cercle ou encore un ou plusieurs arcs de cercle, voire envelopper les formes précitées dans le cas de surfaces ondulées, nervurées ou bosselées. D'une part, cette disposition permet d'éloigner les moyens d'articulation vers l'extérieur, d'autre part, cette surface d'emboîtement complémentaire peut être constituée par une conformation appropriée d'une portion de la poignée et être ainsi intégrée à elle.

Selon une version préférée de l'invention, les surfaces d'emboîtement complémentaires sont respectivement mâle et femelle, ou en d'autres termes, convexe et concave, par exemple hémicylindriques ou encore hémisphériques, une telle conception permettant de faciliter la réalisation du couvercle et du récipient ainsi que leur nettoyage. Les surfaces mâles et femelles peuvent indifféremment appartenir au couvercle ou au récipient.

Des formes de réalisation se rapportant à une version alternative peuvent toutefois être envisagées, telles que des moyens d'articulation formés sur le récipient comme sur le couvercle par des disques coaxiaux de même diamètre, espacés et reliés à leurs voisins immédiats par une paroi couvrant un quart de leur périphérie.

Selon un mode de réalisation préférentiel de la version préférée de l'invention, la surface d'emboîtement femelle est formée par une surface concave s'étendant au plus sur un angle sensiblement de 180°. Une telle conception des surfaces d'emboîtement complémentaires mâle et femelle permet d'enlever et de remettre le couvercle de façon très simple et fiable sans privilégier une direction particulière de mise en place ou de retrait. Elle permet aussi un bon guidage du couvercle selon une trajectoire circulaire par rapport au récipient.

De préférence, ladite surface d'emboîtement concave est solidaire du récipient, une portion au moins de cette surface se situant au-dessus d'un plan parallèle au bord supérieur dudit récipient et passant par le centre de courbure de ladite surface concave, alternativement, ladite surface d'emboîtement concave est solidaire dudit couvercle, une portion au moins de cette surface se situant au-dessous d'un plan parallèle au bord supérieur dudit récipient et passant par le centre de courbure de ladite surface concave. Cette disposition permet de retenir le couvercle lors d'une translation selon l'axe du récipient.

Selon une forme préférée de l'invention, les surfaces d'emboîtement complémentaires sont des surfaces hémisphériques. Grâce à cette disposition, le couvercle peut être articulé selon une multitude d'axes convergeant au centre des surfaces d'emboîtement sphériques.

Selon un autre mode de réalisation, la surface d'emboîtement mâle présente une extrémité libre prévue pour être engagée selon l'axe de pivotement contre la surface d'emboîtement femelle. Cette disposition permet également d'obtenir un couvercle amovible du récipient tout en assurant un guidage lors de la rotation du couvercle. La surface concave peut alors s'étendre sur plus de 180°.

Avantageusement, la surface d'emboîtement mâle ou femelle solidaire du couvercle se situe à l'extrémité d'un bras faisant saillie vers l'extérieur. Cette disposition permet de rendre facilement visible les surfaces d'articulation. Ainsi, si ces surfaces ne sont pas emboîtées l'une dans l'autre, le couvercle se soulève lors de la mise en prise des moyens de verrouillage situés sensiblement à l'opposé, signalant à l'utilisateur que le couvercle n'est pas fermé correctement.

Selon une forme particulièrement avantageuse de l'invention, le couvercle comporte une surface d'emboîtement annulaire intérieure, respectivement extérieure, s'étendant perpendiculairement au plan formé par le bord du couvercle adjacent au bord du récipient et dimensionnée pour s'emboîter à l'intérieur, respectivement à l'extérieur, de l'ouverture du récipient, la dimension de cette surface perpendiculairement audit plan formé par le bord du couvercle étant plus faible dans sa partie opposée aux moyens d'articulation, respectivement dans sa partie la plus proche des moyens d'articulation. Grâce à cette ou ces surfaces d'emboîtement annulaire, le couvercle est guidé par rapport à l'ouverture du récipient. Cette disposition est utile notamment lorsque les surfaces d'emboîtement mâle et femelle des moyens d'articulation sont formés par des surfaces convexe et concave hémisphériques permettant de faire pivoter le couvercle autour d'une multitude d'axes convergents.

Selon une variante de la caractéristique précédente, de préférence, le bord inférieur de la surface d'emboîtement annulaire comporte au moins une encoche tandis que la paroi interne dudit récipient comporte au moins une saillie de positionnement disposée pour venir en prise avec ladite encoche lorsque le couvercle est en position de fermeture sur le récipient. Cette disposition permet d'améliorer le rôle de positionnement de la surface d'emboîtement annulaire solidaire du couvercle.

La présente invention a également pour objet un appareil électroménager de préparation culinaire, comportant un boîtier formant un socle de réception d'un récipient fermé par un couvercle, le récipient et le couvercle comportant des moyens d'articulation, des moyens de verrouillage pour maintenir le couvercle en position de fermeture sur le récipient étant prévus sur le boîtier pour coopérer avec une surface de verrouillage du couvercle, du fait que le récipient et le couvercle forment une enceinte de travail selon les dispositions précédentes.

Avantageusement alors les moyens d'articulation comportent une surface d'emboîtement concave solidaire du récipient, respectivement du couvercle, une portion au moins de cette surface se situant au-dessus, respectivement au dessous, d'un plan passant par le centre de courbure O de ladite surface concave et par le point d'appui des moyens de verrouillage sur la surface de verrouillage du couvercle lorsque lesdits moyens de verrouillage verrouillent le couvercle articulé sur le récipient en position fermée. Cette disposition permet d'obtenir un verrouillage en deux points.

Avantageusement encore les moyens de verrouillage prennent appui sur le couvercle dans une région diamétralement opposée aux moyens d'articulation, cette disposition permettant d'obtenir un verrouillage efficace en seulement deux points, les moyens de verrouillage et les moyens d'articulation.

Avantageusement encore, les moyens de verrouillage prennent appui sur le dessus du couvercle, cette disposition permettant de simplifier la réalisation de l'appareil.

L'invention sera mieux comprise à l'étude d'une forme d'exécution et de variantes d'un récipient muni d'un couvercle de fermeture, objet de la présente invention, décrites ci-après, à titre nullement limitatif et illustrées schématiquement par les figures annexées dans lesquelles :
- la figure 1 est une vue en perspective de cette forme d'exécution, le couvercle étant fermé et verrouillé sur le récipient,
- la figure 2 est une vue semblable à la figure 1, le couvercle étant fermé et déverrouillé,
- la figure 3 est une vue en perspective de cette forme d'exécution, montrant le couvercle écarté du récipient par pivotement autour des moyens de pivotement,
- la figure 4 est une vue en perspective de cette forme d'exécution, montrant le couvercle séparé du récipient,
- la figure 5 est une vue en coupe selon la ligne V-V de la figure 1,
- la figure 6 est une vue schématique en élévation d'une première variante de la forme d'exécution des figures 1-5,
- la figure 7 est une vue schématique de côté en coupe d'une deuxième variante de la forme d'exécution des figures 1-5.

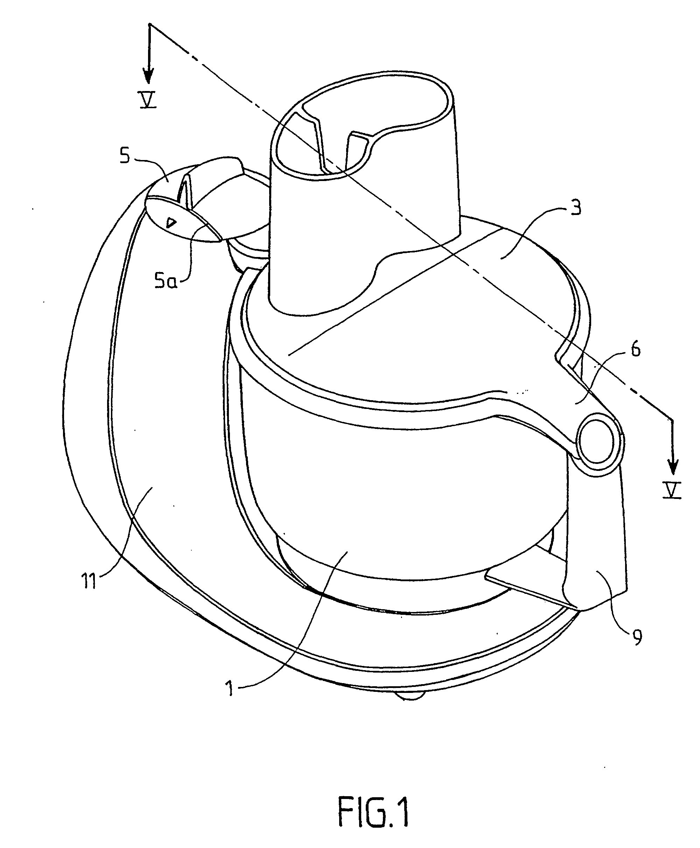

Le récipient 1 illustré par les figures 1-5 est un récipient de robot ménager dont le fond (figure 1) est associé à des moyens de pivotement 2 d'un outil rotatif (non représenté) destinés à venir en prise avec des moyens d'entraînement (non représentés). L'invention se rapportant à l'enceinte de travail formée par le récipient 1 et son couvercle de fermeture 3, le mécanisme du robot ménager ne fait pas partie de cette invention et sa description n'est pas nécessaire à la compréhension de la présente invention.

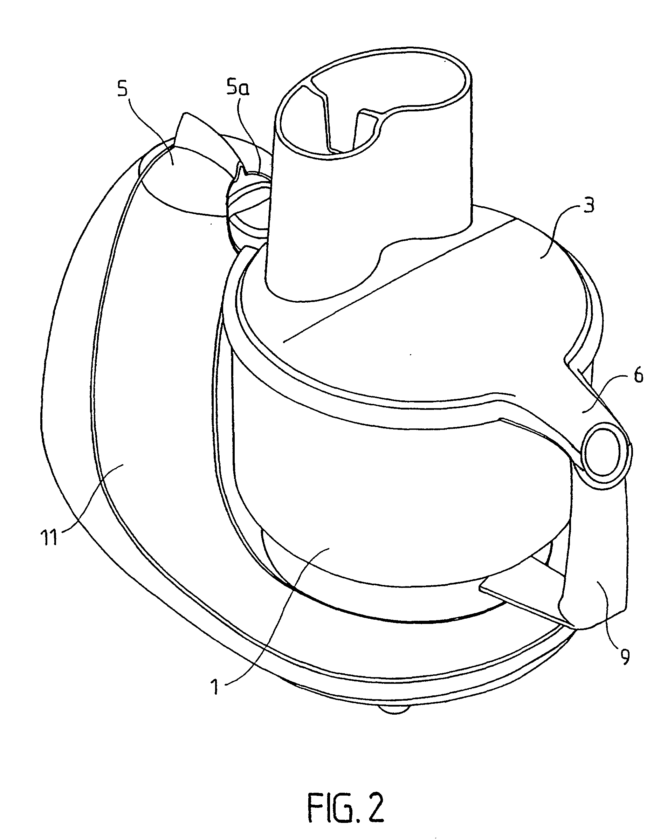

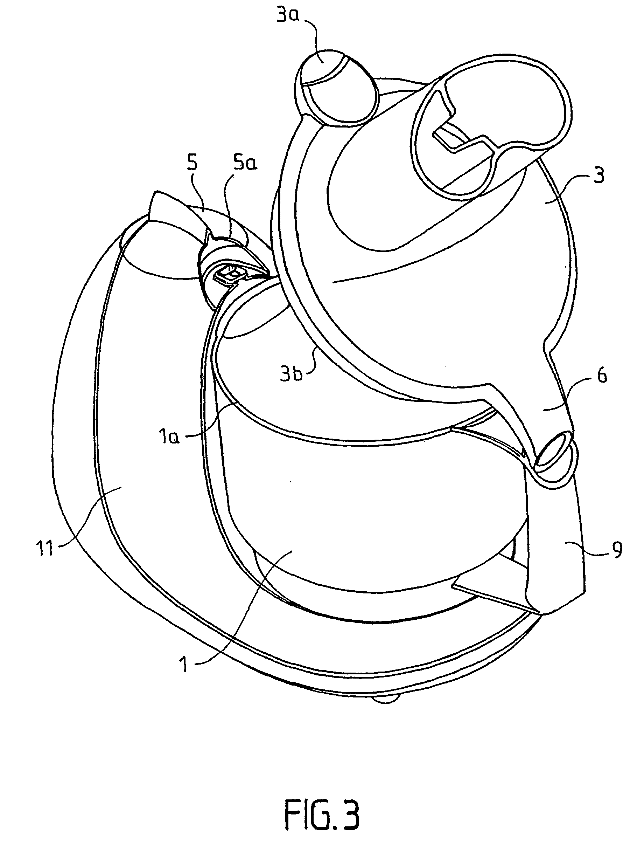

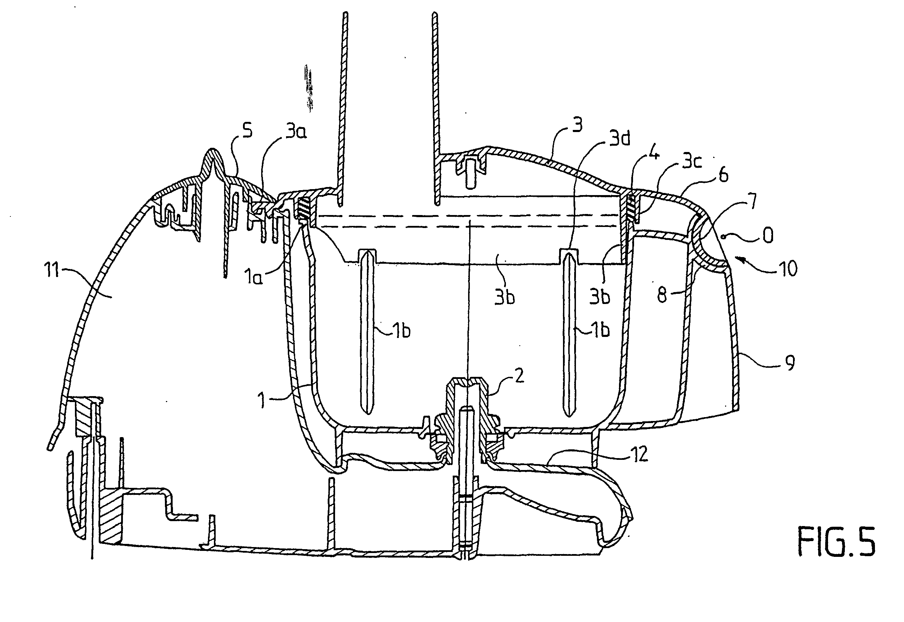

Comme illustré par la figure 5, en position de fermeture, le couvercle 3 est maintenu contre le bord 1a de l'ouverture du récipient 1. Un joint 4 logé dans un logement annulaire ménagé sous le couvercle 1 sert à assurer l'étanchéité entre le bord 1a du récipient 1 et le couvercle 3. Des moyens de verrouillage formés par un disque 5 monté rotativement sur le dessus du boîtier 11 du robot ménager servent à maintenir le bord du couvercle 3 contre le bord 1a du récipient 1. Le disque de verrouillage 5 comporte une découpe 5a correspondant sensiblement à une corde du cercle formé par ce disque 5. Lorsque le disque de verrouillage 5 est tourné dans la position illustrée par la figure 1, il recouvre une surface de verrouillage 3a agencée sur la face supérieure du couvercle 3 (Figures 3, 5), alors qu'en tournant ce disque de verrouillage 5 de 90° pour l'amener dans la position illustrée par les figures 2 et 3, la découpe 5a est amenée en face de la surface de verrouillage 3a du couvercle 3, de sorte que le disque de verrouillage 5 ne recouvre plus la surface de verrouillage 3a du couvercle 3 et libère celui-ci.

Diamétralement opposé au dispositif de verrouillage qui vient d'être décrit, le couvercle 3 comporte, dans cet exemple, un bras radial 6 qui se termine par une surface d'emboîtement 7 formant une portion hémisphérique (figure 5) dont la surface convexe est emboîtée dans une surface d'emboîtement complémentaire 8 formant une portion hémisphérique concave, de même rayon que celui de la surface convexe de la portion hémisphérique du couvercle, ladite surface d'emboîtement 8 concave étant ménagée, dans cet exemple, à l'extrémité supérieure d'une poignée 9 servant à saisir le récipient 1.

Ces deux surfaces complémentaires 7, 8 emboîtées l'une dans l'autre forment des moyens d'articulation 10 entre le récipient 1 et le couvercle 3 et permettent de faire tourner le couvercle 3 par rapport au récipient 1 lorsque le disque de verrouillage 5 libère le couvercle 3. Grâce aux surfaces hémisphériques, la rotation du couvercle 3 par rapport au récipient 1 peut se faire non seulement autour d'un axe de pivotement déterminé, mais aussi autour d'une multitude d'axes de pivotement convergeant au centre de courbure O des surfaces d'emboîtement hémisphériques 7 et 8. De plus l'emboîtement des deux surfaces formant les moyens d'articulation 10 est facilité, le centre de la surface convexe étant dirigé vers le centre de la surface concave par les bords de la surface concave.

Comme illustré en particulier par la figure 5, on peut observer que la surface d'emboîtement concave 8 solidaire du récipient 1 comporte une portion se situant au-dessus d'un plan passant par le centre de courbure ○ de ladite surface concave et par le point d'appui des moyens de verrouillage 5 sur la surface de verrouillage 3a du couvercle 3 lorsque lesdits moyens de verrouillage verrouillent le couvercle 3 articulé sur le récipient 1 en position fermée.

A titre de variante, il est évident que l'on pourrait inverser les surfaces convexe et concave en formant la surface convexe sur la poignée 9 du récipient 1 et la surface concave sur le bras 6 du couvercle 3. Dans ce cas, une portion au moins de la surface d'emboîtement concave solidaire du couvercle 3 se situerait alors au dessous d'un plan passant par le centre de courbure O de ladite surface concave et par ledit point d'appui, pour retenir le couvercle 3 sur le récipient 1 en position de verrouillage du disque de verrouillage 5.

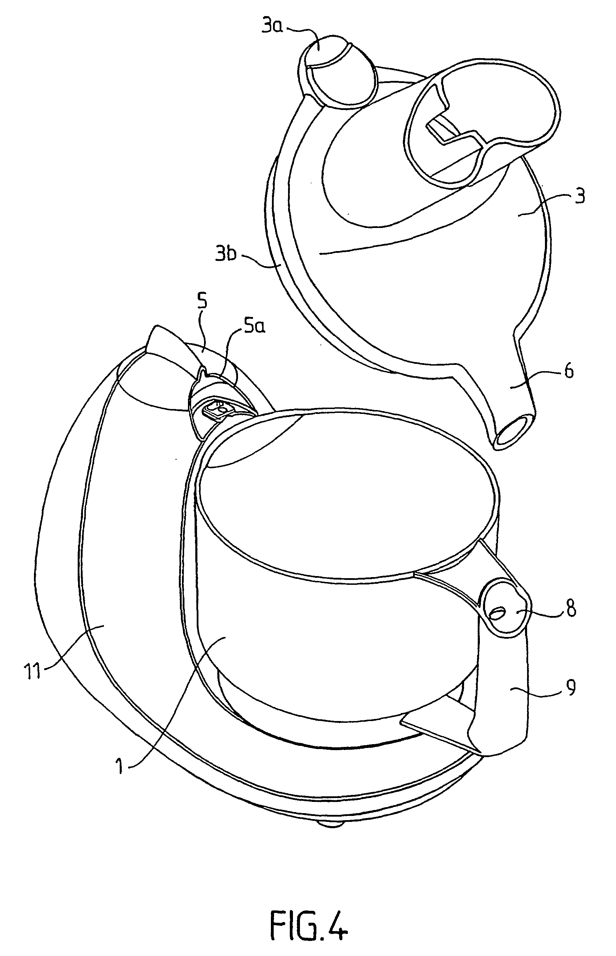

Comme illustré par la figure 4, grâce au mode d'articulation du couvercle 3 sur le récipient 1, le couvercle 3 peut non seulement pivoter sur le récipient 1 mais il peut en être séparé puis remis sans difficulté en séparant l'une de l'autre, respectivement en emboîtant l'une dans l'autre, les surfaces d'emboîtement hémisphériques 7 et 8, ce qui ne présente pas de problème, compte tenu de la grandeur de ces surfaces et du fait qu'elles se situent de préférence, comme dans l'exemple illustré, à une certaine distance du bord du récipient 1.

Etant donné la grande liberté de mouvement que donne l'articulation à rotule entre le couvercle 3 et le récipient 1, la remise en place du couvercle 3 en position de verrouillage peut éventuellement poser un problème quant à l'orientation du couvercle 3 par rapport à la position de verrouillage. A cet effet, tel que montré à la figure 5, la face inférieure du couvercle 3 comporte avantageusement une surface d'emboîtement annulaire intérieure 3b qui s'étend perpendiculairement au plan formé par le bord du couvercle 3 adjacent au bord 1a du récipient 1, formant une sorte de jupe, de sorte qu'elle permet d'orienter convenablement le couvercle 3 sur le récipient 1 lors de la fermeture de ce couvercle. De préférence, la hauteur de cette surface d'emboîtement annulaire intérieure 3b est plus faible à proximité du disque de verrouillage 5 que des surfaces de pivotement convexe, concave 7, 8, afin de faciliter la fermeture du couvercle 3 par pivotement autour des moyens de pivotement ou d'articulation 10.

La face intérieure du couvercle 3 comporte également une surface d'emboîtement annulaire extérieure 3c, prévue pour s'emboîter au moins en partie autour du bord supérieur 1a du récipient 1 et permettant également de guider la mise en place du couvercle 3 sur le récipient 1. De préférence, la hauteur de cette surface d'emboîtement annulaire extérieure 3c est plus faible à proximité des surfaces de pivotement convexe, concave 7, 8, que du disque de verrouillage 5, afin de faciliter la fermeture du couvercle 3 par pivotement autour des moyens de pivotement ou d'articulation 10.

Le joint 4 est par exemple monté dans le logement formé par les surfaces d'emboîtement annulaires 3b et 3c.

Selon une autre variante, des nervures de positionnement 1b peuvent être ménagées pour faire saillie sur la paroi interne du récipient 1 (figure 5). Des encoches 3d peuvent être ménagées dans le bord inférieur de la surface d'emboîtement annulaire 3b du couvercle 3. Ces encoches 3d sont positionnées pour correspondre aux nervures 1b, de manière à ce que ces nervures 1b s'engagent dans les encoches 3d lorsque le couvercle est dans la position de fermeture correcte sur le récipient. Il s'agit là de moyens complémentaires à la surface d'emboîtement annulaire intérieure 3b, pour assurer une mise en place du couvercle 3 dans une position suffisamment précise sur le récipient 1 pour permettre son verrouillage.

Bien entendu, l'invention n'est pas limitée à des surfaces d'emboîtement 7, 8 de forme hémisphérique, et s'applique également à des surfaces d'emboîtement qui seraient cylindriques, semi-cylindriques, ou encore de manière plus générale à des surfaces d'emboîtement comportant des portions de surface présentant selon un axe de pivotement une série de sections au moins partiellement circulaires.

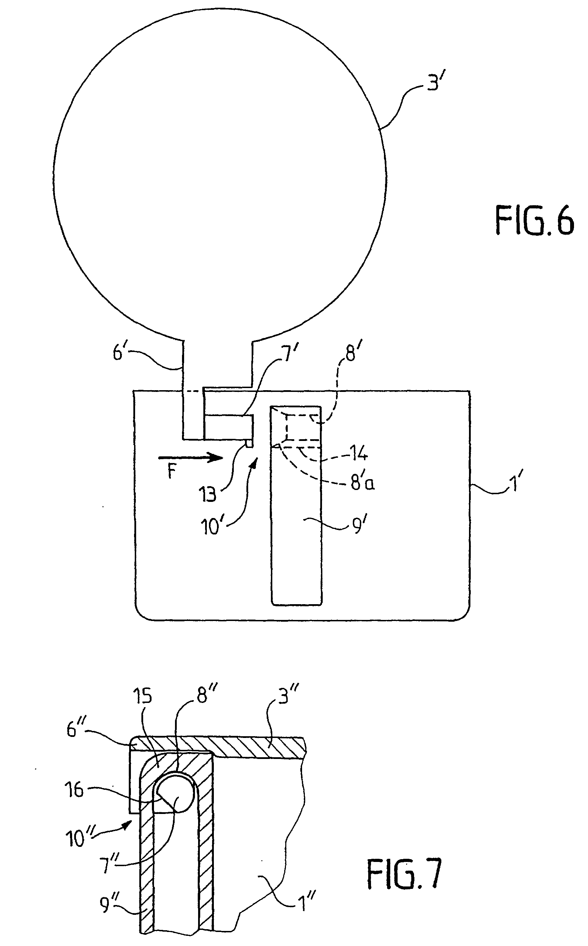

L'invention englobe notamment une variante (figure 6) dans laquelle la surface d'emboîtement mâle serait constituée par une cheville 7' ménagée à l'extrémité du bras radial 6' du couvercle 3', tandis que la poignée 9' serait traversée par un passage cylindrique 8' constituant la surface d'emboîtement femelle des moyens d'articulation 10'. Il suffit alors d'introduire la cheville 7' dans le passage 8' comme le montre la flèche F pour assembler le couvercle 3' sur le récipient 1'. L'entrée du passage cylindrique 8' pourrait être précédé d'un cône de guidage 8'a pour faciliter l'introduction de la cheville 7'. De manière préférée, la longueur de la cheville 7' est supérieure à la longueur du passage 8' et la cheville porte latéralement en son extrémité un ergot 13, prévu pour coulisser dans une rainure 14 ménagée dans le passage 8' lors de l'introduction de ladite cheville dans ledit passage, et pour prendre appui contre une paroi latérale de la poignée 9' du récipient 1' lors de la rotation du couvercle 3'. L'ergot 13 et la rainure 14 sont par exemple agencés pour permettre une mise en place du couvercle 3' lorsque celui-ci occupe une position verticale.

A titre de variante complémentaire, il n'est pas nécessaire que la cheville constituant la surface d'emboîtement mâle présente une section totalement cylindrique, ni que le passage constituant la surface d'emboîtement femelle des moyens d'articulation forme un appui cylindrique. La figure 7 montre une autre variante dans laquelle le passage 8" constituant la surface d'emboîtement femelle des moyens d'articulation 10" est formé par la face inférieure d'un montant supérieur 15 reliant la poignée 9" au récipient 1" et dans lequel la cheville 7" constituant la surface d'emboîtement mâle est issue du bras radial 6" du couvercle 3", et présente un méplat 16 dans une zone non concernée par le pivotement. Un ergot (non représenté à la figure 7) peut également être prévu à l'extrémité de la cheville 7" pour venir en prise avec la poignée 9", le montant 15 ou le récipient 1". La poignée 9" peut également présenter un écartement avec le récipient 1" plus important dans la partie inférieure, afin de faciliter l'insertion de la cheville 7".

La génératrice des surfaces d'emboîtement mâles et femelles des moyens d'articulation n'est pas nécessairement une portion de cercle, comme dans l'exemple de réalisation présenté aux figures 1 à 5, ni une portion de droite parallèle à l'axe de pivotement, comme dans les variantes présentées aux figures 6 et 7, mais peut notamment être une portion de droite coupant l'axe de pivotement, pour former alors une portion de cône, ou encore être une portion d'ellipse, pour former une portion d'ellipsoïde.

Les sections des surfaces d'emboîtement mâles peuvent être circulaires, c'est à dire s'étendre sur 360°, dans le cas de surfaces d'emboîtement présentant des sections constantes et ou décroissantes, engagées dans une direction correspondant à l'axe de pivotement des moyens d'articulation. Toutefois des sections au plus semi-circulaires permettant un engagement selon des directions différentes de celle de l'axe de pivotement des moyens d'articulation sont d'une utilisation beaucoup moins contraignante, l'utilisateur pouvant simplement poser les surfaces d'emboîtement l'une contre l'autre. De manière préférée, les surfaces d'emboîtement présentent alors par rapport à l'axe de pivotement des sections dont le diamètre varie de manière progressive, afin de guider sans effort particulier pour l'utilisateur les surfaces d'emboîtement lors de la mise en place de l'articulation.

La surface de verrouillage du couvercle est de préférence disposée de manière diamétralement opposée aux moyens d'articulation, pour simplifier la réalisation des moyens de verrouillage de l'appareil. Toutefois la surface de verrouillage n'est pas nécessairement agencée sur la face supérieure du couvercle.

## Revendications

1. Enceinte de travail pour appareil électroménager de préparation culinaire, comprenant un récipient (1 ; 1' ; 1") et un couvercle (3 ; 3' ; 3"), le récipient et le couvercle comportant des moyens d'articulation (10; 10' ; 10"), les moyens d'articulation (10 ; 10' ; 10") comportant deux surfaces d'emboîtement (7, 8 ; 7', 8' ; 7", 8") complémentaires, solidaires l'une (7; 7' ; 7") du couvercle (3, 3', 3") et l'autre (8 ; 8' ; 8") du récipient (1 ; 1' ; 1"), présentant selon au moins un axe de pivotement une série de sections au moins partiellement circulaires perpendiculaires audit axe de pivotement, **caractérisé en ce que** le couvercle (3 ; 3' ; 3") est amovible du récipient (1 ; 1' ; 1"), la surface d'emboîtement (8 ; 8' ; 8") solidaire du récipient (1 ; 1' ; 1") étant ménagée sur une poignée (9 ; 9' ; 9") du récipient.

2. Enceinte selon la revendication 1, **caractérisé en ce que** les surfaces d'emboîtement complémentaires sont respectivement mâle (7 ; 7' ; 7") et femelle (8 ; 8' ; 8").

3. Enceinte selon la revendication 2, **caractérisé en ce que** la surface d'emboîtement femelle (8 ; 8' ; 8") est formée par une surface concave s'étendant au plus sur un angle sensiblement de 180°.

4. Enceinte selon la revendication 3, **caractérisé en ce que** la surface d'emboîtement (8 ; 8' ; 8") concave est solidaire du récipient (1 ; 1' ; 1"), respectivement du couvercle, une portion au moins de cette surface se situant au-dessus, respectivement au dessous, d'un plan parallèle au bord supérieur du récipient et passant par le centre de courbure de ladite surface concave.

5. Enceinte selon la revendication 4, **caractérisé en ce que** les surfaces d'emboîtement complémentaires (7, 8) sont des surfaces hémisphériques.

6. Enceinte selon l'une des revendications 1 à 4, **caractérisé en ce que** la surface d'emboîtement (7' ; 7") mâle présente une extrémité libre prévue pour être engagée selon l'axe de pivotement contre la surface d'emboîtement femelle (8' ; 8").

7. Enceinte selon l'une des revendications précédentes, **caractérisé en ce que** la surface d'emboîtement mâle (7 ; 7' ; 7") ou femelle solidaire du couvercle (3 ; 3' ; 3") se situe à l'extrémité d'un bras (6 ; 6' ; 6") faisant saillie vers l'extérieur.

8. Enceinte selon l'une des revendications précédentes, **caractérisé en ce que** le couvercle (3) comporte une surface d'emboîtement annulaire intérieure (3b), respectivement extérieure (3c), s'étendant perpendiculairement au plan formé par le bord du couvercle (3) adjacent au bord (1a) du récipient (1) et dimensionnée pour s'emboîter à l'intérieur, respectivement à l'extérieur, de l'ouverture du récipient (1), la dimension de cette surface (3b ; 3c) perpendiculairement audit plan formé par le bord du couvercle (3) étant plus faible dans sa partie opposée aux moyens d'articulation (10), respectivement dans sa partie la plus proche des moyens d'articulation (10).

9. Enceinte selon la revendication 8, **caractérisé en ce que** le bord inférieur de la surface d'emboîtement annulaire intérieure (3b) comporte au moins une encoche (3d) tandis que la paroi interne du récipient (1) comporte au moins une saillie de positionnement (1b) disposée pour venir en prise avec ladite encoche (3d) en position de fermeture du récipient (1).

10. Appareil électroménager de préparation culinaire comportant un boîtier (11) formant un socle (12) de réception d'un récipient (1) fermé par un couvercle (3), le récipient et le couvercle comportant des moyens d'articulation (10), des moyens de verrouillage (5) pour maintenir le couvercle en position de fermeture sur le récipient étant prévus sur le boîtier pour coopérer avec une surface de verrouillage (3a) du couvercle, **caractérisé en ce que** le récipient (1) et le couvercle (3) forment une enceinte de travail selon l'une des revendications précédentes.

11. Appareil selon la revendication 10, **caractérisé en ce que** les moyens d'articulation (10) comportent une surface d'emboîtement concave (8) solidaire du récipient (1), respectivement du couvercle, une portion au moins de cette surface se situant au-dessus, respectivement au dessous, d'un plan passant par le centre de courbure (O) de ladite surface concave et par le point d'appui des moyens de verrouillage (5) sur la surface de verrouillage (3a) du couvercle lorsque lesdits moyens de verrouillage verrouillent le couvercle (3) articulé sur le récipient (1) en position fermée.

12. Appareil selon la revendication 11, **caractérisé en ce que** les moyens de verrouillage (5) prennent appui sur le couvercle (3) dans une région diamétralement opposée aux moyens d'articulation (10).

13. Appareil selon l'une des revendications 11 ou 12, **caractérisé en ce que** les moyens de verrouillage (5) prennent appui sur le dessus du couvercle (3).

## Patentansprüche

1. Arbeitsraum für ein Elektrohaushaltsgerät zur Nahrungsmittelzubereitung mit einem Behälter (1; 1'; 1") und einem Deckel (3; 3'; 3"), wobei der Behälter und der Deckel Anlenkmittel (10; 10'; 10") aufweisen, wobei die Anlenkmittel (10; 10', 10") zwei komplementäre Ineinanderfügungsflächen (7, 8; 7', 8'; 7", 8") aufweisen, wobei eine (7; 7'; 7") mit dem Deckel (3, 3', 3") und die andere (8; 8'; 8") mit dem Behälter (1; 1'; 1") fest verbunden ist, die entlang mindestens einer Drehachse eine Reihe von zumindest teilweise kreisförmigen, zur Drehachse senkrechten Abschnitten aufweisen, **dadurch gekennzeichnet, daß** der Deckel (3; 3'; 3 ") vom Behälter (1; 1; 1") abnehmbar ist, wobei die Ineinanderfügungsfläche (8; 8'; 8"), die mit dem Behälter (1; 1'; 1") fest verbunden ist, an einem Griff (9; 9'; 9") des Behälters ausgebildet ist.

2. Raum nach Anspruch 1, **dadurch gekennzeichnet, daß** die komplementären Ineinanderfügungsflächen vorspringend (7; 7'; 7") bzw. hohl (8; 8'; 8") sind.

3. Raum nach Anspruch 2, **dadurch gekennzeichnet, daß** die hohle Ineinanderfügungsfläche (8; 8'; 8") durch eine konkave Fläche gebildet ist, die sich höchstens auf einem Winkel von im wesentlichen 180° erstreckt.

4. Raum nach Anspruch 3, **dadurch gekennzeichnet, daß** die konkave Ineinanderfügungsfläche (8; 8'; 8") mit dem Behälter (1; 1'; 1") bzw. mit dem Deckel fest verbunden ist, wobei sich zumindest ein Teil dieser Fläche über bzw. unter einer zum oberen Rand des Behälters parallelen Ebene befindet, die durch den Krümmungsmittelpunkt der konkaven Fläche verläuft.

5. Raum nach Anspruch 4, **dadurch gekennzeichnet, daß** die komplementären Ineinanderfügungsflächen (7, 8) halbkugelförmige Flächen sind.

6. Raum nach einem der Ansprüche 1 bis 4, **dadurch gekennzeichnet, daß** die vorspringende Ineinanderfügungsfläche (7'; 7") ein freies Ende aufweist, das vorgesehen ist, um entlang der Drehachse mit der hohlen Ineinanderfügungsfläche (8'; 8") in Eingriff zu stehen.

7. Raum nach einem der vorangehenden Ansprüche, **dadurch gekennzeichnet, daß** die vorspringende (7; 7'; 7") oder hohle Ineinanderfügungsfläche, die mit dem Deckel (3; 3'; 3") fest verbunden ist, am Ende eines Arms (6; 6'; 6") liegt, der nach außen vorsteht.

8. Raum nach einem der vorangehenden Ansprüche, **dadurch gekennzeichnet, daß** der Deckel (3) eine ringförmige innere (3b) bzw. äußere (3c) Ineinanderfügungsfläche aufweist, die sich zu der durch den Rand des Deckels (3) gebildeten Ebene senkrecht benachbart zum Rand (1a) des Behälters (1) erstreckt und bemessen ist, um in das Innere bzw. in das Äußere der Öffnung des Behälters (1) zu passen, wobei die Abmessung dieser Fläche (3b; 3c) senkrecht zu der vom Rand des Deckels (3) gebildeten Ebene in ihrem zu den Anlenkmitteln (10) entgegengesetzten Teil bzw. in ihrem Teil, der zu den Anlenkmitteln (10) am nächsten liegt, geringer ist.

9. Raum nach Anspruch 8, **dadurch gekennzeichnet, daß** der untere Rand der ringförmigen inneren Ineinanderfügungsfläche (3b) mindestens einen Einschnitt (3d) aufweist, während die Innenwand des Behälters (1) mindestens einen Positionierungsvorsprung (1b) aufweist, der angeordnet ist, um mit dem Einschnitt (3d) in der Verschlußposition des Behälters (1) in Eingriff zu kommen.

10. Elektrohaushaltsgerät zur Kochzubereitung mit einem Gehäuse (11), das einen Sockel (12) zur Aufnahme eines Behälters (1) bildet, der mit einem Deckel (3) verschlossen ist, wobei der Behälter und der Deckel Anlenkmittel (10) aufweisen, wobei Verriegelungsmittel (5) zum Halten des Deckels in der Verschlußposition auf dem Behälter an dem Gehäuse vorgesehen sind, um mit einer Verriegelungsfläche (3a) des Deckels zusammenzuwirken, **dadurch gekennzeichnet, daß** der Behälter (1) und der Deckel (3) einen Arbeitsraum nach einem der vorangehenden Ansprüche bilden.

11. Gerät nach Anspruch 10, **dadurch gekennzeichnet, daß** die Anlenkmittel (10) eine konkave Ineinanderfügungsfläche (8) aufweisen, die mit dem Behälter (1) bzw. dem Deckel fest verbunden ist, wobei zumindest ein Teil dieser Fläche sich über bzw. unter einer Ebene befindet, die durch das Krümmungszentrum (O) der konkaven Fläche und durch den Anlagepunkt der Verriegelungsmittel (5) an der Verriegelungsfläche (3a) des Deckels verläuft, wenn die Verriegelungsmittel den am Behälter (1) angelenkten Deckel (3) in der geschlossenen Position verriegeln.

12. Gerät nach Anspruch 11, **dadurch gekennzeichnet, daß** die Verriegelungsmittel (5) am Deckel (3) in einem zu den Anlenkmitteln (10) diametral entgegengesetzten Bereich anliegen.

13. Gerät nach einem der Ansprüche 11 oder 12, **dadurch gekennzeichnet, daß** die Verriegelungsmittel (5) an der Oberseite des Deckels (3) anliegen.

## Claims

1. A working chamber for an electrical household food processor appliance, the working chamber comprising a vessel (1; 1'; 1") and a lid (3; 3'; 3"), the vessel and the lid including hinge means (10; 10'; 10"), the hinge means (10; 10'; 10") comprising two complementary engagement surfaces (7, 8; 7', 8'; 7", 8") one (7; 7'; 7") integral with the lid (3; 3'; 3") and the other (8; 8'; 8") with the vessel (1; 1'; 1"), said engagement surfaces presenting along each pivot axis a series of sections that are at least partially circular perpendicularly to said pivot axis, the chamber being **characterized in that** the lid (3; 3'; 3") is removable from the vessel (1; 1'; 1"), the engagement surface (8; 8'; 8") integral with the vessel (1; 1'; 1") being formed on a handle (9; 9'; 9") of the vessel.

2. A chamber according to claim 1, **characterized in that** the complementary engagement surfaces are respectively male (7; 7'; 7") and female (8; 8'; 8").

3. A chamber according to claim 2, **characterized in that** the female engagement surface (8; 8'; 8") is formed by a concave surface extending at most over an angle of substantially 180°.

4. A chamber according to claim 3, **characterized in that** the concave engagement surface (8; 8'; 8") is integral with one of the vessel (1; 1'; 1") and the lid, at least a portion of said surface being situated respectively above or below a plane parallel to the top edge of the vessel and containing the center of curvature of said concave surface.

5. A chamber according to claim 4, **characterized in that** the complementary engagement surfaces (7, 8) are hemispherical surfaces.

6. A chamber according to any one of claims 1 to 4, **characterized in that** the male engagement surface (7'; 7") presents a free end designed to be engaged along the pivot axis against the female engagement surface (8'; 8").

7. A chamber according to any preceding claim, **characterized in that** the male or female engagement surface (7; 7'; 7") integral with the lid (3; 3'; 3") is situated at the end of an outwardly projecting arm (6; 6'; 6").

8. A chamber according to any preceding claim, **characterized in that** the lid (3) has an annular engagement surface extending perpendicularly to the plane formed by the edge of the lid (3) adjacent to the edge (1a) of the vessel (1), said annular engagement surface being on the inside (3b) or on the outside (3c) and being dimensioned to engage the opening of the vessel (1) respectively on the inside or the outside thereof, the dimension of said surface (3b; 3c) perpendicularly to said plane formed by the edge of the lid (3) being smaller respectively in its portion farther from the hinge means (10) or in its portion closer to the hinge means (10).

9. A chamber according to claim 8, **characterized in that** the bottom edge of the inside annular engagement surface (3b) includes at least one notch (3d), while the inside wall of the vessel (1) includes at least one positioning projection (1b) disposed to engage with said notch (3d) in the closed position of the vessel (1).

10. An electrical household food processor appliance comprising a housing (11) forming a base (12) for receiving a vessel (1) closed by a lid (3), the vessel and the lid including hinge means (10), locking means (5) for holding the lid in the closed position on the vessel being provided on the housing to co-operate with a locking surface (3a) of the lid, the food processor appliance being **characterized in that** the vessel (1) and the lid (3) constitute a working chamber according to any preceding claim.

11. An appliance according to claim 10, **characterized in that** the hinged means (10) comprise a concave engagement surface (8) integral with one of the vessel (1) and the lid, at least a portion of said surface being situated respectively above or below a plane including the center of curvature (O) of said concave surface and the point where the locking means (5) bear against the locking surface (3a) when said locking means are locking the lid (3) hinged on the vessel (1) in the closed position.

12. An appliance according to claim 11, **characterized in that** the locking means (5) bear against the lid (3) in a region that is diametrically opposite from the hinge means (10).

13. An appliance according to claim 11 or claim 12, **characterized in that** the locking means (5) bear against the top of the lid (3).
